Europäisches Patentamt

European Patent Office

Office européen des brevets

(11) Publication number: **0 035 855**
**B1**

# (12) EUROPEAN PATENT SPECIFICATION

(45) Date of publication of patent specification: **27.12.84**

(51) Int. Cl.³: **B 62 K 21/12**

(21) Application number: **81300863.8**

(22) Date of filing: **03.03.81**

(54) Modified cross-section handlebars for bicycles.

(30) Priority: **06.03.80 JP 30114/80 u**

(43) Date of publication of application:
**16.09.81 Bulletin 81/37**

(45) Publication of the grant of the patent:
**27.12.84 Bulletin 84/52**

(84) Designated Contracting States:
**BE DE FR GB IT**

(56) References cited:
**EP-A-0 001 646**
**FR-A- 953 453**
**FR-A-1 047 414**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho Midorigaoka-Minamimachi Sakai-shi**
**Osaka (JP)**

(74) Representative: **Szczuka, Jan Tymoteusz et al**
**Cruikshank & Fairweather 19 Royal Exchange Square**
**Glasgow G1 3AE Scotland (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a pair of handlebars for a cycle for mounting on a handlebar stem of the cycle and supporting at least one brake and/or gear control lever, said handlebars having a handlebars body having a central mounting portion via which said handlebars is mounted on said handlebar stem, in use of the handlebars, said handlebars body having a predetermined transverse cross-sectional shape.

In general conventional cycle handlebars whether of flat-, drop-, or upright-type, are made from circular cross-section pipe, so that the air flow around them, in particular at the trailing side of the handlebars is relatively turbulent — especially when running at high speed. This results in significant air resistance against the forward running of the cycle. In addition the handlebars carries at one end or often at both ends control levers, usually for the brakes, but also possibly for a derailleur. Also control wires and outer sheaths therefor are connected to the levers and extend therefrom along the cycle frame, for example, along the head tube to brakes provided at the front and rear wheels or to front and/or rear derailleurs. The control wires and outer sheaths therefor are, in the vicinity of the control levers, usually arranged to extend in an arc with a relatively large radius of curvature so that they project through a substantial distance forwards of the handlebars, thereby also increasing air resistance to the forward running of the cycle. This is undesirable, especially in the case of racing cycles used for road racing, and also gives the cycle a somewhat unattractive appearance.

The former problem of the transverse cross-sectional shape of the handlebars can be overcome by making the handlebars with a streamlined cross-section, but such handlebars would be complex to machine and expensive to produce in comparison with those formed in conventional manner from circular cross-section pipe. The other problem of projecting wires and outer sheaths can be overcome by leading the control wires through the handlebars body, but through-bores are necessary to permit the introduction of the wires to the interior of the body thus resulting in a new problem in the reduced strength of the handlebars.

EP—A—0001646 discloses a pair of handlebars for a cycle, for mounting on a handlebar stem of the cycle and supporting at least one brake and/or gear control lever, said handlebars having a handlebars body having a central mounting portion via which said handlebars is mounted on said handlebar stem, in use of the handlebars, said handlebars body having a predetermined transverse cross-sectional shape and a covering.

In the above disclosure the covering comprises a simple soft covering for the purposes of cushioning any impact therewith as during a collision, and insulation against vibration transmission and thermal conduction. The cross-sectional shape of the covering may be, as shown in the drawings, elliptical but is in fact formed and arranged to extend from the upper and lower sides of the handlebars body thereby increasing air resistance during forward running of the cycle.

It is an object of the present invention to overcome or reduce the above problems and disadvantages.

The present invention provides a pair of handlebars for a cycle, for mounting on a handlebar stem of the cycle and supporting at least one brake and/or gear control lever, said handlebars having a handlebars body having a central mounting portion via which said handlebars is mounted on said handlebar stem, in use of the handlebars, said handlebars body having a predetermined transverse cross-sectional shape and a covering characterized in that there is provided a pair of extension members extending outwardly of the central mounting portion along the trailing side of said handlebars body on respective sides of the central mounting portion each said extension member comprising, in transverse section, a convex side surface and a concave side surface, said convex side surface being generally hemi-elliptical and said concave side surface being formed to fit the predetermined cross-sectional shape of the handlebars body at said trailing side thereof.

The provision of the extension or spoiler members i.e. members for reducing air-resistance and increasing streamlining in the handlebars of the invention makes them relatively streamlined in a simple and economical manner, thereby reducing air turbulence around the handlebars.

Conveniently, a pair of first extension members and a pair of second extension members separate therefrom, are secured to the handlebars body along both the trailing and the leading sides respectively, to still further improve the streamlining of the handlebars.

The handlebars of the invention also advantageously utilizes the abovementioned extension members to accommodate control wires from control levers along the bar body, the control wires being led through bores extending along the interior of the extension members. Consequently, there is no need to use conventional outer sheaths for the control wires or for the wires to project inwardly in large loops from the handlebars. In other words, the extension members themselves can serve as the outer sheaths. Thus a pair of handlebars of the invention can in a preferred form also guide the control wires without any increase in the number of parts involved whilst also overcoming the problem of the air resistance against the control wires and their outer sheaths.

In addition, the above type of preferred embodiment may, if desired, readily accommodate the use of the outer sheaths also, in which case the bore in each extension member is made with an internal diameter slightly larger than the exterior of the outer sheath.

The advantage of using the outer sheaths inside the extension members is that they are usually provided on their inner surfaces with liners for smooth and easy movement of the wire therein, so that the bores need not be specially formed to provide smooth low friction inner surfaces for easy movement of the control wire therein. As a result, the extension members are more easily manufactured.

On the other hand, where the extension members are already formed of a low-friction material, such as synthetic resin, they may be readily used without sheaths for the wires. The extension members secured to the handlebars body are preferably flexible to enable them to easily fit onto the handlebars body even when this is cranked and also to enable them to be easily gripped by a rider.

The extension members may be secured to the handlebars body with the aid of an adhesive, or may be secured with a handlebars tape of the type often wound around a handlebars body to provide an improved grip thereon. In addition, although the handlebars body is preferably of conventional circular cross-section for ease of manufacture, the present invention is not limited to such shapes but may also be used with handlebar bodies of other e.g. polygonal or irregular shapes.

Further preferred features and advantages of the invention will appear from the following description given by way of example of a pair of handlebars of the invention illustrated with reference to the accompanying drawings in which:

Fig. 1 is a schematic side view of a cycle provided with a pair of handlebars of the invention;

Fig. 2 is a plan view of an embodiment of a handlebars of the invention;

Fig. 3 is a transverse sectional view on an enlarged scale of the handlebars body of the embodiment of Figs. 1 and 2 taken on the line III—III in Fig. 2; and

Fig. 4 is a partially sectioned detail view illustrating the mounting of one control lever on the handlebars of Fig. 2.

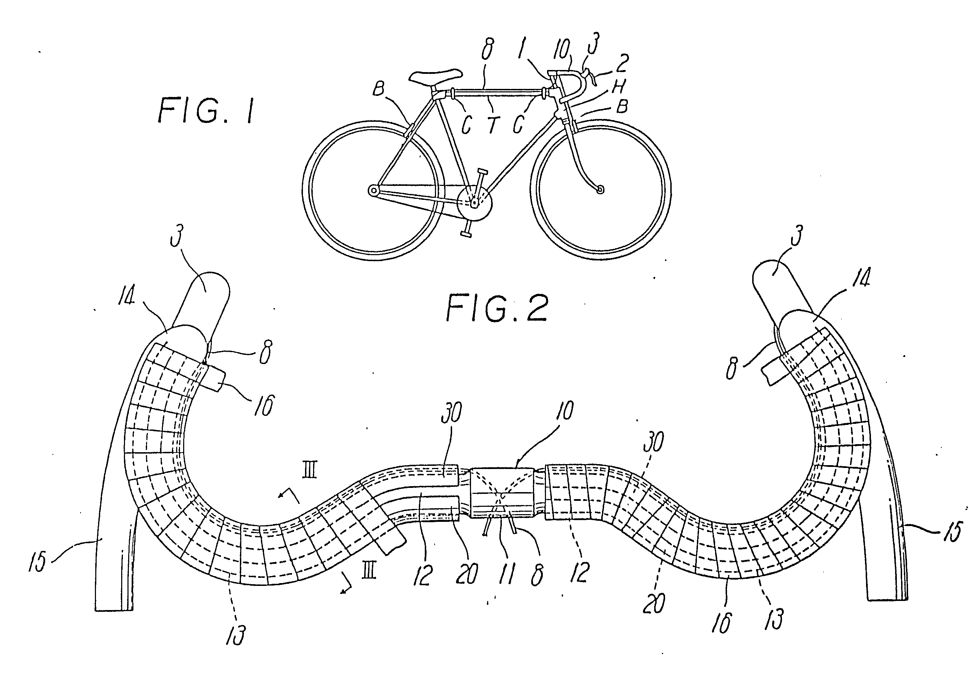

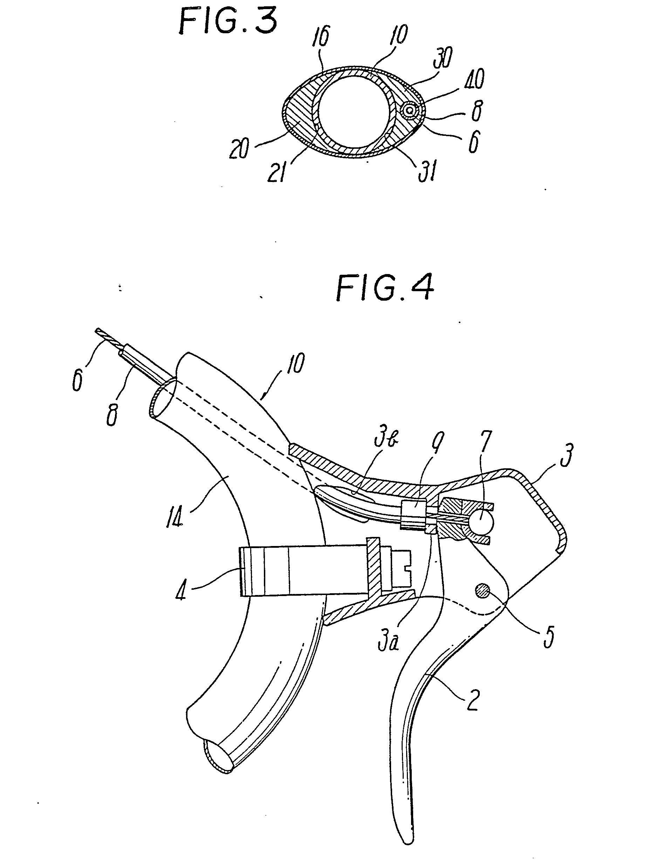

A pair of drop-type handlebars shown in Figs. 1 and 2 has a handlebars body 10 having a central mounting portion 11 via which the handlebars body 10 is mounted on a handlebar stem 1 of a cycle shown in Fig. 1. The body 10 comprises successively: first straight portions 12 extending axially of the mounting portion 11 in continuation thereof and horizontally therefrom (with reference to their normal use position on the cycle); first cranked portions 13 curving forwardly from respective ends of the first straight portions 12; second cranked portions 14 arching downwardly and rearwardly from the ends of the first cranked portions 13 and second straight portions 15 extending rearwardly from the lower rear ends of the second cranked portions 14. As shown in Fig. 4 the second cranked portions 14 are provided at front portions thereof with brake control levers 2 mounted in respective bracket members 3 which are secured to the second cranked portions 14 by means of respective fixing bands 4. The control levers 2 are pivotally mounted in the bracket members 3 via control lever pins 5 and are provided with retainers 7 for engaging the ends of control wires 6 which are connected at their other ends to brakes B shown in Fig. 1.

An outer sheath 8 for each control wire 6 is supported via a holder 9 at one side of a stop means 3a provided within the bracket member 3, the control wire 6 and outer sheath 8 being led out of the bracket member 3 through an aperture 3b.

The handlebars body 10 of the handlebars of the invention is formed of a pipe which is of circular cross-section. A pair of discrete first extension members 20, further described hereinbelow, formed separately from the handlebars body 10, is secured in contact therewith as shown in Figs. 2 and 3.

Each extension member 20 is, as shown in Fig. 3, generally hemi-elliptical when viewed in transverse cross-section with a concave surface 21 at a minor axis extending along one side of the member 20 and formed to more or less closely fit the outer surface of the handlebars body 10 along one side of the latter. As may be seen in Fig. 2 each extension member 21 extends from a position in proximity to the central mounting portion 11 along the handlebars body 10 almost up to the bracket member 3 and is fixed to the outer surface of the handlebars body 10 along the trailing side thereof.

The extension members 20 are conveniently secured to the trailing side of the handlebars body 10 with the aid of an adhesive and/or conventional handlebars tape 16 which is wound around both the handlebars body 10 and extension members 20 to securely hold the latter against the former.

The handlebars tape 16 is in Fig. 2 shown as only extending up to the outer end of each extension member 20, but would in practice usually be continued right up to the distal end of each second straight portion 15.

Figs. 2 and 3 also show a pair of discrete second extension members 30 separate from the first extension members 20.

Each of the second extension members 30 has a similar transverse cross-section to that of the first extension members 20 formed to fit the outer surface of the handlebars body 10 on the leading side of the latter and also has a similar length. As may be seen from Figs. 2 and 3, the second extension members 30 are secured to the bar body 10 along the leading side thereof in the same way as the first extension members 20, using the same handlebar tape 16, the tape being wound around the whole assembly of handlebars body 10 and first and second extension members 20, 30.

When both the first and second extension members 20, 30 are secured to the handlebars body 10, the handlebars become substantially elliptic in transverse cross section, and thus particularly effective in reducing air resistance.

The first and second extension members 20 and 30 may have the same overall cross section as shown in Fig. 3, but preferably the transversely central radially outer surface of each first extension member 20 has a smaller radius of curvature than the corresponding part of each second extension member 30, so that the handlebars becomes even more streamlined in cross section.

In the above described form of construction, both the first and second extension members 20 and 30 are made from synthetic resin, so as to be flexible, and either or possibly both (the second extension members 30, in the case of the embodiment shown in Fig. 3) are provided with through-bores 40 for accommodating respective control wires 6.

The advantage of forming the extension members 20 and 30 of a flexible material, is to make them easy to attach along handlebar bodies 10 of various shapes, especially where these are cranked, and also makes them easier to grip by a rider. Nevertheless, if the handlebars body 10 is straight and/or has separate grips and/or the extension members 20, 30 are to be formed to fit precisely, then other materials, including rigid ones, may also be employed.

The through bores 40 are used for conducting the control wires 6 along the handlebars body 10 from the control levers 2, so that the wires 6 together with the outer sheaths need not project forwardly from the handlebar in large loops as with conventional arrangements.

In the drawings, a conventional outer sheath 8 is used, and is led out through a side wall of bracket 3 and then led, together with the wire 6, into a respective bore 40 which has an inner diameter slightly larger than the outer diameter of the sheath 8.

As will be apparent from the above, the control wires 6, and any outer sheaths 8, where these are employed, can be guided along the handlebars body 10 in the bores 40 of the second extension members 30, so that the outer sheaths 8 and control wires 6 do not project at all from the handlebars thereby reducing air resistance and giving the handlebars an attractive 'clean' appearance.

In addition, each outer sheath 8 and each control wire 6 is led into a respective bore 40 from an opening at one end thereof in proximity to control lever 2, led out from a further opening of the respective bore 40 in proximity to the central mounting portion 11, and then led along a top tube T and/or head tube H of the cycle to reach the front and rear brakes B with suitable intermediate mountings C as and where required.

Alternatively, the second extension members 30 in the above embodiment could be omitted if preferred. Also the through bores 40 could be provided in the first extension members 20 instead of the second ones.

Also if only one control lever 2 is provided at one end of the handlebars body 2, a through bore 40 need only be provided in an extension member 20 or 30 on that side of the handlebars body 10 carrying said one control lever 2.

The outer sheaths 8 may also be omitted if desired, in which case a control wire 6 is led through a bore 40 provided in the extension member 20 or 30 by itself. In this case, it is preferable that each bore 40 is constructed for easy sliding of the control wire 6 therein, a suitable material being used for the extension member 20 or 30 or a lining therein.

Furthermore, when the extension member 20 or 30 itself serves as the outer sheath, a separate outer sheath may be mounted at an end of the respective extension member 20 or 30 remote from the respective bracket 3, so that the control wire 6 is led out of the bore 40 into the separate outer sheath.

It will also be appreciated that the handlebars of the invention may be of any form, for example, flat-type, drop-type or upright-type handlebars.

## Claims

1. A pair of handlebars for a cycle, for mounting on a handlebar stem of the cycle and supporting at least one brake and/or gear control lever (2), said handlebars having a handlebars body (10) having a central mounting portion (11) via which said handlebars is mounted on said handlebar stem, in use of the handlebars, said handlebars body (10) having a predetermined transverse cross-sectional shape and a covering (16) characterized in that there is provided a pair of extension members (20) extending outwardly of the central mounting portion (11) along the trailing side of said handlebars body (10) on respective sides of the central mounting portion (11) each said extension member (20) comprising, in transverse section, a convex side surface and a concave side surface (21), said convex side surface being generally hemi-elliptical and said concave side surface (21) being formed to fit the predetermined cross-sectional shape of the handlebars body (10) at said trailing side thereof.

2. Handlebars according to Claim 1, wherein is provided a pair of first said extension members (20) and a pair of second extension members (30), said first extension members (20) being secured to said handlebars body (10) along the trailing side thereof, said second extension members (30) being generally similar to said first extension members (20) but with their concave surfaces (31) formed to fit the leading side of the handlebars body (10), and being secured to said leading side.

3. Handlebars according to Claim 2, wherein at least one of said first and second extension members (20, 30) has a bore (40) extending therethrough for accommodating a control wire (6) extending from said control lever (2).

4. Handlebars according to Claim 3, wherein said bore (40) is formed for accommodating a said control wire (6) in an outer sheath (8) therefor.

5. Handlebars according to any one of Claims 1 to 4 wherein each of said extension members (20, 30) is secured to said handlebars body (10) by a handlebars tape (16) wound around an assembly comprising said handlebars body (10) and extension members (20, 30).

6. Handlebars according to any one of Claims 1 to 5 wherein the extension members (20, 30) are of a flexible synthetic resin material.

7. Handlebars according to any one of Claims 1 to 6 wherein said handlebars body (10) has a generally circular transverse cross-sectional shape and the concave surfaces (21, 31) of the extension members (20, 30) are part-circular.

8. Handlebars according to any one of Claims 1 to 7 wherein each of the extension members (20, 30) extends from a position at or in proximity to the central mounting portion (11) to a position at or in proximity to the respective distal end of the handlebars body (10).

9. Handlebars according to any one of Claims 1 to 7 wherein each of the extension members (20, 30) extends from a position at or in proximity to the central mounting portion (11) to a position at or in proximity to a bracket (3) for mounting a said control lever (2).

**Revendications**

1. Guidon de bicyclette, prévu pour être monté sur une tige de guidon de la bicyclette et supporter au moins un levier de commande (2) de frein et/ou de changement de vitesse, ce guidon comprenant un corps de guidon (10) qui comporte une partie centrale de montage (11) par l'intermédiaire de laquelle le guidon est monté sur la tige de guidon, pour l'utilisation du guidon, le corps de guidon (10) ayant une section transversale de configuration prédéterminée, caractérisé en ce qu'il comprend une paire de pièces d'extension (20) s'étendant vers l'extérieur à partir de la partie centrale de montage (11) le long du côté arrière du corps de guidon (10), de part et d'autre de la partie centrale de montage (11), chaque pièce d'extension (20) comprenant, en section transversale, une surface latérale convexe et une surface latérale concave (21), la surface latérale convexe étant sensiblement semi-elliptique et la surface latérale concave (21) étant profilée de manière à correspondre à la configuration transversale prédéterminée du corps de guidon (10), du côté arrière de celui-ci.

2. Guidon suivant la revendication 1, dans lequel il est prévu une paire de premières pièces d'extension (20) et une paire de deuxièmes pièces d'extension (30), les premières pièces d'extension (20) étant fixées au corps de guidon (10) le long de son côté arrière, les deuxièmes pièces d'extension (30) étant sensiblement conformes aux premières pièces d'extension (20) mais avec leurs surfaces concaves (31) profilées pour correspondre au côté avant du corps de guidon (10) et étant fixées à ce côté avant.

3. Guidon suivant la revendication 2, dans lequel au moins une des premières et deuxièmes pièces d'extension (20, 30) comporte un passage intérieur traversant (40) pour le logement d'un câble de commande (6) venant du levier de commande (2).

4. Guidon suivant la revendication 3, dans lequel le passage (40) est prévu pour recevoir un câble de commande (6) dans une gaine extérieure (8).

5. Guidon suivant l'une quelconque des revendications 1 à 4, dans lequel chacune des pièces d'extension (20, 30) est fixée au corps de guidon (10) par un ruban de guidon (16), enroulé autour d'un ensemble comprenant le corps de guidon (10) et les pièces d'extension (20, 30).

6. Guidon suivant l'une quelconque des revendications 1 à 5, dans lequel les pièces d'extension (20, 30) sont en résine synthétique flexible.

7. Guidon suivant l'une quelconque des revendications 1 à 6, dans lequel le corps de guidon (10) a une section transversale sensiblement circulaire et les surfaces concaves (21, 31) des pièces d'extension (20, 30) sont partiellement circulaires.

8. Guidon suivant l'une quelconque des revendications 1 à 7, dans lequel chacune des pièces d'extension (20, 30) s'étend d'une position partant, ou au voisinage, de la partie centrale de montage (11) à une position située à l'extrémité libre respective du corps de guidon (10), ou à son voisinage.

9. Guidon suivant l'une quelconque des revendications 1 à 7, dans lequel chacune des pièces d'extension (20, 30) s'étend d'une position située à la partie centrale de montage (11), ou à son voisinage, à une position située à l'endroit d'un support (3) de montage d'un levier de commande (2), ou à son voisinage.

**Patentansprüche**

1. Fahrradlenkstangenpaar zur Anordnung an einer Lenkstangenspindel eines Fahrrads und zur Aufnahme von wenigstens einem Brems- und/oder Gangsteuerungshebel (2), wobei die Fahrradlenkstangen einen Lenkstangenkörper (10) mit einem mittigen Befestigungsabschnitt (11) aufweisen, über den die Lenkstangen an der Lenkstangenspindel befestigt sind, wobei zur Benutzung der Lenkstangenkörper (10) eine vorbestimmte Querschnittsgestalt und einen Überzug (16) aufweist, dadurch gekennzeichnet, daß ein Paar von vorspringenden Teilen (20) vorgesehen ist, welche sich außerhalb des mittigen Befestigungsabschnitts (11) entlang der Profilhinterseite des Lenkstangenkörpers (10) an den entsprechenden Seiten des mittigen Befestigungsabschnitts (11) erstrecken, wobei jedes der Teile (20) im Querschnitt eine konvexe Seite der Oberfläche und eine konkave Seite der Oberfläche (21) aufweist, wobei die konvexe Seite der Oberfläche im wesentlichen halbeliptisch und die konkave Seite der Oberfläche (21) derart ausgebildet ist, daß sie der vorbestimmten Querschnittsform des Lenkstangenkörpers (10) an dessen Profilhinterseite angepaßt ist.

2. Fahrradlenkstangenpaar nach Anspruch 1, dadurch gekennzeichnet, daß ein Paar der ersten vorspringenden Teile (20) und ein Paar von zweiten vorspringenden Teilen (30) vorgesehen ist, wobei die ersten Teile (20) mit dem Lenkstangenkörper (10) entlang dessen Profilhinterseite fest verbunden sind, die zweiten Teile (30) im wesentlichen ähnlich wie die ersten Teile (20) ausgebildet sind, jedoch ihre konkaven Oberflächen (31) derart ausgebildet sind, daß sie der Profilvorderseite des Lenkstangenkörpers (10) angepaßt und mit dieser Profilvorderseite verbunden sind.

3. Fahrradlenkstangenpaar nach Anspruch 2, dadurch gekennzeichnet, daß wenigstens eines der ersten und zweiten Teile (20, 30) eine sie durchdringende Bohrung (40) aufweist, um einen Steuerdraht (6) aufzunehmen, der sich von dem Steuerhebel (2) aus erstreckt.

4. Fahrradlenkstangenpaar nach Anspruch 3, dadurch gekennzeichnet, daß die Bohrung (40) derart ausgebildet ist, daß sie den Steuerdraht (6) in einer für ihn vorgesehenen äußeren Ummantelung (8) aufnimmt.

5. Fahrradlenkstangenpaar nach einem der Anspruch 1 bis 4, dadurch gekennzeichnet, daß jedes der Teile (20, 30) mit dem Lenkstangenkörper (10) mittels eines Lenkstangenbandes (16) verbunden ist, welches um eine Anordnung aus Lenkstangenkörper (10) und Teilen (20, 30) gewickelt ist.

6. Fahrradlenkstangenpaar nach einem der Ansprüche 1 bis 5, dadurch gekennzeichnet, daß die Teile (20, 30) aus einem flexiblen Kunstharz-Material gebildet sind.

7. Fahrradlenkstangenpaar nach einem der Ansprüche 1 bis 6, dadurch gekennzeichnet, daß der Lenkstangenkörper (10) eine im wesentlichen kreisförmige Querschnittsform aufweist und die konkaven Oberflächen (21, 31) der Teile (20, 30) teilkreisförmig ausgebildet sind.

8. Fahrradlenkstangenpaar nach einem der Ansprüche 1 bis 7, dadurch gekennzeichnet, daß jedes der Teile (20, 30) sich von einer Position an oder in der Nähe des mittigen Befestigungsabschnitts (11) bis zu einer Position am oder in der Nähe des entsprechenden anderen Endes des Lenkstangenkörpers (10) erstreckt.

9. Fahrradlenkstangenpaar nach einem der Ansprüche 1 bis 7, dadurch gekennzeichnet, daß jedes der Teile (20, 30) sich von einer Position an oder in der Nähe des mittigen Befestigungsabschnitts (11) bis zu einer Lage an oder in der Nähe eines Stützarmes (3) erstreckt, an dem der Steuerhebel (2) angeordnet ist.

FIG. 1

FIG.2

0035855

# FIG. 3

# FIG. 4